# EUROPEAN PATENT SPECIFICATION

(11) **EP 3 783 329 B1**
(45) Date of publication and mention of the grant of the patent: **04.05.2022**
(21) Application number: 19824790.0
(22) Date of filing: 02.01.2019
(51) Int. Cl.: G01M 3/26

(54) **MONITORING METHOD AND MONITORING SYSTEM FOR CRACKING STATE OF BLADE, AND BLADE**
ÜBERWACHUNGSVERFAHREN UND ÜBERWACHUNGSSYSTEM FÜR DEN RISSZUSTAND EINER SCHAUFEL UND SCHAUFEL
PROCÉDÉ ET SYSTÈME DE SURVEILLANCE DE L'ÉTAT DE FISSURATION D'UNE PALE, ET PALE

(30) Priority: 29.06.2018 CN 201810712741
(43) Date of publication of application: 24.02.2021
(73) Proprietor: Jiangsu Goldwind Science & Technology Co., Ltd., Yancheng, Jiangsu 224100 (CN)
(72) Inventor: LI, Xiaoming, Yancheng, Jiangsu 224100 (CN)
(74) Representative: Gulde & Partner
(86) International application number: PCT/CN2019/070082
(87) International publication number: WO 2020/000996

(56) References cited:
- CN-A- 1 122 903
- CN-A- 104 458 910
- CN-A- 108 760 187
- KR-A- 20130 139 523
- KR-A- 20130 139 523
- US-A- 5 014 544

## Description

### TECHNICAL FIELD

The present disclosure relates to the technical field of wind power, and in particular to a monitoring method for a cracking state of a blade, a monitoring system and a blade.

### BACKGROUND

The blades accounts for about 20% of the cost of the whole set. With the increasing size of blades, the maintenance and replacement cost of offshore blades and foreign blades becomes high, and the cycle becomes long. The direct loss caused by major cracking failure of blades and the loss caused by power outage of wind turbine generator set have a significant impact on the wind farm owner, and lead to safety risks.

In the prior art, in order to monitor the failure resulting from cracking of the blade and provide early alerting, a variety of technologies such as acoustic emission and natural frequency technologies have been developed. The above-mentioned technology can monitor and alert the failure resulting from cracking of the blade to a certain extent, some corresponding shortcomings exist. For example, monitoring using acoustic emission has a high misjudgment rate due to background noise. Monitoring using natural frequency requires a large amount of failure data to support, but failure resulting from cracking is not a high probability event, and no sufficient data can be obtained for judgment, so the misjudgment rate is also high.

Therefore, there is an urgent need for a novel monitoring method for a cracking state of the blade, a novel monitoring system and a novel blade.

The document CN1122903A discloses an equipment for monitoring the immediately will-be-failure of static and dynamic part or member in monolithic respect, including: a sealed cavity sealed with stable vacuum source on or in the part or member, a connecting part includes a high-impedance fluid flowrate device between the cavity and source, and a device for monitoring the pressure variation between the cavity and source.

The document KR20130139523A discloses a system for inspecting damage to a blade for a wind turbine and a method for inspecting damage to the blade using the same, including: a closing device which closes a predetermined internal space of the blade for a wind turbine; an air supply unit which presses the closed space by injecting air into the closed space; and a pressure sensor which measures the internal pressure of the closed space to determine whether the blade is damaged or not.

### SUMMARY

The invention consists of a monitoring method as defined in claim 1 and a monitoring system as defined in claim 6.

The embodiments of the present disclosure provide a monitoring method for a cracking state of a blade, a monitoring system, and a blade, which can achieve the monitoring of the cracking state of the blade with a low misjudgment rate.

In one aspect, an embodiment of the present disclosure provides a monitoring method for a cracking state of a blade. The blade has a root portion and a tip portion in a length direction of the blade. The blade includes a plurality of blade components and a connecting body. The plurality of blade components are connected with each other by the connecting body and form a cavity. The plurality of blade components comprises a windward-side shell, a leeward-side shell, and a web plate, the connecting body is connected at least one of: between the windward-side shell and the leeward-side shell, between the windward-side shell and the web plate, and between the leeward-side shell and the web plate. The monitoring method includes: a step of providing a pressure transmission assembly, wherein the pressure transmission assembly includes a side wall, a hollow space enclosed by the side wall, and an opening provided on the side wall and in communication with the hollow space; a step of forming a sealed cavity, including placing the pressure transmission assembly within the cavity at a connection between the blade component and the connecting body, and fixing the pressure transmission assembly by the connecting body, such that a region around the opening of the pressure transmission assembly and the corresponding blade component are sealingly connected with each other, and the pressure transmission assembly and the blade component together form the sealed cavity with a preset air pressure value, wherein the connecting body is formed by solidification of an adhesive, and the pressure transmission assembly extends from the root portion of the blade to the tip portion of the blade; a step of detecting an actual air pressure value, including detecting the actual air pressure value within the sealed cavity by using a detector; and a step of determining the cracking state, including determining the cracking state of the blade according to the actual air pressure value and the preset air pressure value.

In another aspect, an embodiment of the present disclosure provides a monitoring system for the cracking state of the blade. The blade has a root portion and a tip portion in a length direction of the blade. The blade includes a plurality of blade components and a connecting body. The plurality of blade components are connected with each other by the connecting body and form a cavity. The plurality of blade components comprises a windward-side shell, a leeward-side shell, and a web plate, the connecting body is connected at least one of: between the windward-side shell and the leeward-side shell, between the windward-side shell and the web plate, and between the leeward-side shell and the web plate. The monitoring system for the cracking state of the blade includes: a pressure transmission assembly including a side wall, a hollow space enclosed by the side wall, and an opening provided on the side wall and in communication with the hollow space, wherein the pressure transmission assembly is placed within the cavity at a connection between the blade component and the connecting body, and is fixed by the connecting body, such that a region around the opening of the pressure transmission assembly and the corresponding blade component are sealingly connected with each other, and the pressure transmission assembly and the blade component together form the sealed cavity with a preset air pressure value, wherein the connecting body is formed by solidification of an adhesive, and the pressure transmission assembly extends from the root portion of the blade to the tip portion of the blade; a detector connected to the pressure transmission assembly, wherein the detector is disposed on the blade component and is used to detect an actual air pressure value within the sealed cavity; and a controller configured to determine the cracking state of the blade according to the actual air pressure value and the preset air pressure value.

In still another aspect, an embodiment of the present disclosure provides a blade having a root portion and a tip portion in a length direction of the blade, the blade including a plurality of blade components, wherein the plurality of blade components are connected with each other by a connecting body and form a cavity, the plurality of blade components comprises a windward-side shell, a leeward-side shell, and a web plate, the connecting body is connected at least one of: between the windward-side shell and the leeward-side shell, between the windward-side shell and the web plate, and between the leeward-side shell and the web plate, and the connecting body is formed by solidification of an adhesive; the monitoring system for the cracking state of the blade described as above, wherein the pressure transmission assembly is placed within the cavity at a connection between the blade component and the connecting body, and is fixed by the connecting body, such that a region around the opening of the pressure transmission assembly and the corresponding blade component are sealingly connected with each other and the pressure transmission assembly and the blade component together form the sealed cavity with a preset air pressure value, wherein the pressure transmission assembly extends from the root portion of the blade to the tip portion of the blade, the detector is connected with the pressure transmission assembly and is disposed on the blade component.

The monitoring method for the cracking state of the blade, the monitoring system, and the blade according to the embodiments of the present disclosure are used for the blade. The blade includes blade components such as a windward-side shell, a leeward-side shell, and a web plate. The monitoring method includes the step of providing the pressure transmission assembly and the step of forming the sealed cavity. By placing the pressure transmission assembly within the cavity at the connection between the blade component and the connecting body and by fixing the pressure transmission assembly by the connecting body, the region around the opening of the pressure transmission assembly and the corresponding blade component are sealingly connected with each other, and the pressure transmission assembly and the blade component together form the sealed cavity with the preset air pressure value. Further, since the step of detecting the actual air pressure value is included, the pressure value within the sealed cavity may be detected by the detector. When the blade cracks, the air pressure value within the sealed cavity will change, therefore the cracking state of the blade can be determined based on the actual air pressure value and the preset air pressure value. Therefore, the monitoring of the cracking state of the blade can be achieved without being interfered by external factors, and the misjudgment rate of the monitoring result can be effectively reduced.

### DESCRIPTION OF THE DRAWINGS

The features, advantages, and technical effects of exemplary embodiments of the present disclosure will be described below with reference to the accompanying drawings.
Fig. 1 is a schematic structural view of a blade in the prior art;
Fig. 2 is a cross-sectional view along the A-A direction in Fig. 1;
Fig. 3 is a schematic cross-sectional structural view of a pressure transmission assembly according to an embodiment of the present disclosure;
Fig. 4 is a schematic structural view of a blade according to an embodiment of the present disclosure;
Fig. 5 is a cross-sectional view along the B-B direction in Fig. 4;
Fig. 6 is an enlarged view at a portion C in Fig. 5;
Fig. 7 is a structural block diagram of a monitoring system for a cracking state of a blade according to an embodiment of the present disclosure;
Fig. 8 is a structural block diagram of a controller according to an embodiment of the present disclosure;
Fig. 9 is a schematic structural view of a transition pipe body according to an embodiment of the present disclosure.

Description of Reference Numerals:
1a-root portion; 1b-tip portion; 1c-front edge; 1d-back edge; X-length direction;
10-pressure transmission assembly; 11-side wall; 12-hollow space; 13-opening; 14-sealed cavity;
20-detector;
30-controller; 31-signal receiving module; 32-comparing module; 33-judging module; 34-execution module;
40-gas generator; 41-pressure pump; 42-check valve; 43-relay;
50-transition connecting section; 51-joint; 52-transition pipe body; 521-first connecting section; 521a-notch; 522-second connecting section;
60-power supply;
70-windward-side shell;
80-leeward-side shell;
90-web plate;
100-connecting body;
110-cavity.

In the drawings, the same components are indicated by the same reference signs. The drawings are not drawn to actual scale.

### DETAILED DESCRIPTION

Features and exemplary embodiments of various aspects of the present disclosure are described in detail below. In the following detailed description, numerous specific details are set forth, to provide comprehensive understanding of the present disclosure. However, for those skilled in the art, it will be apparent to that the present disclosure may be practiced without some of the specific details. The following description according to an embodiments is merely to provide a better understanding of the present disclosure by illustrating examples of the present disclosure. In the drawings and the following description, at least some of the known structures and techniques are not shown, to avoid unnecessarily obscuring the present disclosure; for clarity, the size of some of the structures may be enlarged. In addition, features, structures, or characteristics described hereinafter may be combined in any suitable manner in one or more embodiments.

The orientation terms appearing in the following description refer to the directions shown in the drawings, and are not intended to limit a monitoring method for a cracking state of a blade and the specific structure of a monitoring system and the blade of the present disclosure. In the description of the present disclosure, it should also be stated, unless otherwise specified and limited, the terms "installed", "connected" or the like should be understood in a broad sense. For example, connection may refer to fixed connection or disassembly connection; or may refer to integral connection; or may refer to direct connection or indirect connection. For the ordinary person skilled in the art, the specific meanings of the above terms in the present disclosure may be understood according to specific situations.

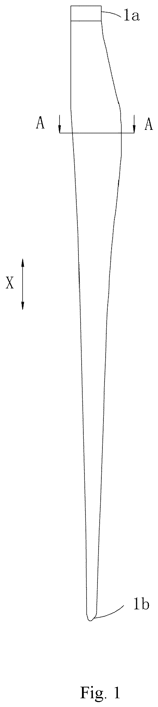

The monitoring method for the cracking state of the blade, the monitoring system, and the blade according to the embodiments of the present disclosure will be described in detail below with reference to Figs. 1-9.

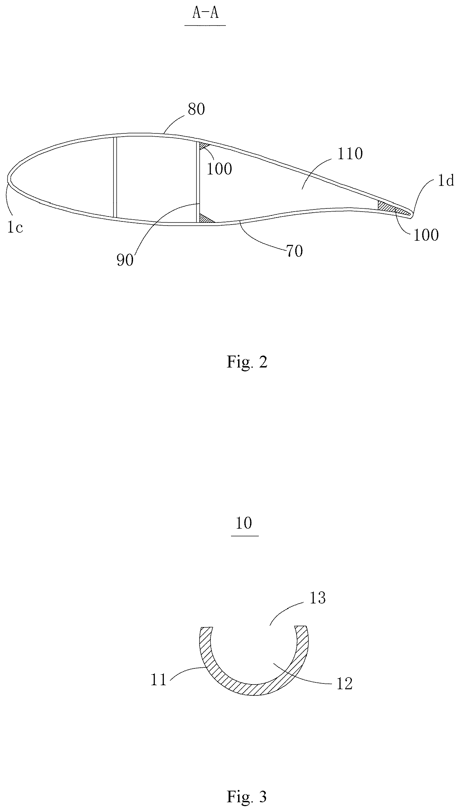

Fig. 1 shows a schematic structural view of the blade in the prior art, and Fig. 2 shows a cross-sectional view along the A-A direction in Fig. 1.

The embodiment of the present disclosure provides a monitoring method for the cracking state of the blade, which can be used to monitor the cracking state of the blade. Please referring to Figs. 1 and 2, the blade has a root portion 1a and a tip portion 1b in the length direction of the blade, and the blade itself may include a plurality of blade components and a connecting body 100, and the plurality of blade components are connected with each other by the connecting body 100 and form a cavity 110. Optionally, the blade may include a windward-side shell 70 and a leeward-side shell 80. Apparently, optionally, the blade may further include a web plate 90. The windward-side shell 70 and the leeward-side shell 80 are disposed opposite to each other and abutted to each other to form the cavity 110 between windward-side shell 70 and the leeward-side shell 80. A front edge 1c and a rear edges 1d which are opposite are formed at the abutment. The connecting body 100 may be connected between the windward-side shell 70 and the leeward-side shell 80, between the windward-side shell 70 and the web plate 90, and between the leeward-side shell 80 and the web plate 90.

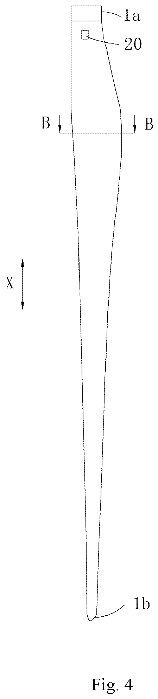

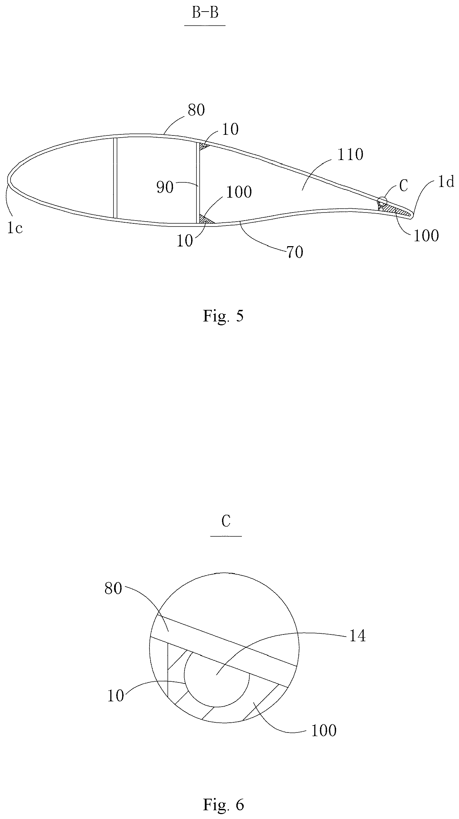

Fig. 3 shows a schematic structural view of a pressure transmission assembly according to an embodiment of the present disclosure, Fig. 4 shows a schematic structural view of the blade according to an embodiment of the present disclosure, Fig. 5 shows a cross-sectional view along the B-B direction in Fig. 4, and Fig. 6 shows an enlarged view at a portion C in Fig. 5. The monitoring method for the cracking state of the blade according to the embodiment of the present disclosure includes steps described later.

A step of providing the pressure transmission assembly 10 is included. Please referring to Fig. 3, the pressure transmission assembly 10 includes a side wall 11, a hollow space 12 enclosed by the side wall 11, and an opening 13 disposed on the side wall 11 and in communication with the hollow space 12. The pressure transmission assembly 10 may be in the form of a tube with a predetermined length, or in the form of an air bag. The number of the opening 13 may be one, and one opening 13 penetrates the pressure transmission assembly10 along an extending direction of the pressure transmission assembly10. Apparently, the number of openings 13 may alternatively be two or more, and two or more openings 13 are spaced apart from each other along the extending direction of the pressure transmission assembly10. The pressure transmission assembly 10 itself may extend along the length direction X of the blade, and specifically, may extend from the root portion 1a of the blade to the tip portion 1b of the blade. In an example, the pressure transmission assembly10 may be an ohmic tube, which may made of PVC and have a cross-sectional size which may be optionally 6mm-25mm. The cross-sectional size specifically refers to a radial size of the cross-section. In an example, the connecting body 100 may be a structural body formed by solidification of an adhesive.

A step of forming the sealed cavity 14 is included. Please refer to Figs. 4 to 6 together, the pressure transmission assembly 10 is placed within the cavity 110 at the connection between the blade component and the connecting body 100, and fixed by the connecting body 100, such that a region around the opening 13 of the pressure transmission assembly 10 and the corresponding blade component are sealingly connected with each other, and the pressure transmission assembly 10 and the blade component together form a sealed cavity 14 with a preset air pressure value. Specifically, In an example, the connecting body 100 between the windward-side shell 70 and the leeward-side shell 80, the connecting body 100 between the windward-side shell 70 and the web plate 90, and the connecting body 100 between the leeward-side shell 80 and the web plate 90 are respectively provided with the pressure transmission assembly 10, and the corresponding sealed cavities 14 are formed.

A step of detecting an actual air pressure value is included. A detector 20 is used to detect the actual air pressure value within the sealed cavity 14. The detector 20 may be a pressure sensor, and the actual air pressure value within the sealed cavity 14 may be directly detected by the detector 20. Apparently, in some other embodiments, the detector 20 may alternatively be in other form of sensor, as long as the actual air pressure value (or pressure change) within the sealed cavity 14 can be directly or indirectly detected. Optionally, the detector 20 may be disposed at different position of the blade. The detector 20 may be located within the cavity 110 inside the blade. Apparently, the detector 20 may be disposed outside the blade. Specifically, the detector 20 may be located inside or outside the root portion 1a of the blade. Therefore, when the detector 20 is damaged, it is convenient to open the corresponding protective facilities at the root portion of the blade for maintenance or replacement.

A step of determining the cracking state is included. The cracking state of the blade is determined based on the actual air pressure value and the preset air pressure value. At the step of forming the sealed cavity 14, the pressure transmission assembly 10 and the corresponding blade component form the sealed cavity 14 with the preset air pressure value. A case in which the cracking occurs at the rear edge 1d at the abutment of the windward-side shell 70 and the leeward-side shell 80 is taken as an example. Since the pressure transmission assembly 10 is fixed by the corresponding connecting body 100, when the blade cracks, the corresponding blade component may be separated from the pressure transmission assembly 10 under an external force, and a leakage will occur at the sealed cavity 14, and the pressure within the sealed cavity 14 will accordingly change. Apparently, if the blade does not crack, no leakage will occur at the sealed cavity 14, and the pressure within the corresponding sealed cavity 14 will maintain the preset air pressure value. Therefore, according to the actual air pressure value and the preset air pressure value, the cracking state of the blade can be determined.

In the monitoring method for the cracking state of the blade according to the embodiment of the present disclosure, the step of providing the pressure transmission assembly 10 and the step of forming the sealed cavity 14 are included. By placing the pressure transmission assembly 10 within the cavity 110 at the connection between the blade component and the connecting body 100 and by fixing it by the connecting body 100, the region around the opening 13 of the pressure transmission assembly 10 and the corresponding blade component are sealingly connected with each other, and the pressure transmission assembly 10 and the blade component together form the sealed cavity 14 with the preset air pressure value. Further, the step of detecting the actual air pressure value is included. The actual air pressure value within the sealed cavity 14 may be detected in real time by the detector 20. When the blade cracks, the air pressure value within the sealed cavity 14 will change, therefore the cracking state of the blade can be determined based on the actual air pressure value and the preset air pressure value. Therefore, the monitoring of the cracking state of the blade can be achieved without being interfered by external factors, and the misjudgment rate of the monitoring result can be effectively reduced.

Moreover, by using the monitoring method according to the embodiment of the present disclosure, real-time monitoring of the cracking state of the blade can be achieved by adjusting the detection frequency of the detector to the actual air pressure value within sealed cavity 14.

In an example, the step of determining the cracking state includes: determining that the blade is in a cracking state, if a ratio of a difference between the actual air pressure value and the preset air pressure value to the preset air pressure value is within a range of a first preset threshold and a pressure change ratio within the sealed cavity 14 per unit time exceeds a range of a second preset threshold. The pressure change ratio per unit time refers to a ratio of the difference between the actual air pressure value currently detected by the detector 20 and the actual air pressure value detected last time to the actual air pressure value detected last time.

The preset air pressure value may be any value between 0Mpa and 4Mpa, including the two end values of 0Mpa and 4Mpa. The first preset threshold value range may be any value between 50% and 80%, including the two end values of 50% and 80%, and preferably any value between 60% and 70%. The range of the second preset threshold may be any value between 1% and 5%, including two end values of 1% and 5%, and preferably any value between 2% and 4%.

The preset air pressure value of 4Mpa is taken as an example. When the actual air pressure value currently detected by the detector 20 is 1Mpa and the actual air pressure value detected last time per unit time is 1.1Mpa, the ratio of the difference between the current actual air pressure value and the preset air pressure value to the preset air pressure value is 75% and is thus within the first preset threshold value, while the pressure change ratio within the sealed cavity 14 per unit time is 10% and thus exceeds the second preset threshold value range. In such case, since the pressure within the sealed cavity 14 has changed greatly, and since the pressure change ratio exceeds the range of the second preset threshold, it can be determined that the pressure change within the sealed cavity 14 is caused by the cracking of the blade.

As an optional implementation manner, the step of determining the cracking state further includes: determining that the blade is in a non-cracking state and outputting a signal indicating that the pressure transmission assembly 10 is in a pressure-to-be-adjusted state, if the ratio of the difference between the actual air pressure value and the preset air pressure value to the preset air pressure value is within the range of the first preset threshold and the pressure change ratio within the sealed cavity 14 per unit time is within the range of the second preset threshold.

The preset air pressure value of 4Mpa is still taken as an example. When the actual air pressure value currently detected by the detector 20 is 1Mpa and the actual air pressure value detected last time per unit time is 1.02Mpa, the ratio of the difference between the current actual air pressure value and the preset air pressure value to the preset air pressure value is 75% and is thus within the first preset threshold value, while the pressure change ratio within the sealed cavity 14 per unit time is 2% and is thus within the second preset threshold value range. In such case, since the pressure within the sealed cavity 14 has changed greatly, and since the pressure change does not exceed the range of the second preset threshold, it means that the speed of the pressure change is slow, it can be determined that the blade is in the non-cracking state, and the signal indicating that the pressure transmission assembly 10 is in a pressure-to-be-adjusted state can be output.

The blade has a long length, and accordingly the pressure transmission assembly 10 has a long length. Since the blade is mostly located outdoors, the pressure within the sealed cavity 14 may change as the seasonal temperature changes. Therefore, when it is determined that the blade is in the non-cracking state and the signal indicating that the pressure transmission assembly 10 is in the pressure-to-be-adjusted state is output, in order to ensure long-term effective monitoring of the cracking state of the blade, optionally, the monitoring method may further include a step of adjusting pressure. The step of adjusting pressure includes: adjusting the pressure within the sealed cavity 14 according to the signal indicating the pressure-to-be-adjusted state, such that the actual air pressure value within the sealed cavity 14 is equal to the preset air pressure value, so as to better ensure the monitoring of the blade and to prevent the monitoring failure caused by the long-term natural pressure relief.

Therefore, the monitoring method for the cracking state of the blade according to the embodiment of the present disclosure limits the range of the preset air pressure value, such that the pressure transmission assembly 10 and the like will not generate pressure load on the corresponding blade component of the blade, and therefore, the requirements of sealing connection between the pressure transmission assembly 10 and the corresponding blade components can be reduced. Accordingly, by limiting the range of the range of the first preset threshold and the range of the second preset threshold, and by limiting the condition under which the blade is in the cracking state, the condition under which the blade is in the non-cracking state, and the condition under which the pressure transmission assembly10 is in the pressure-to-be-adjusted state, the misjudgment rate of the monitoring method can be further reduced, and frequent pressure adjustment within the enclosed cavity 14 can be avoided.

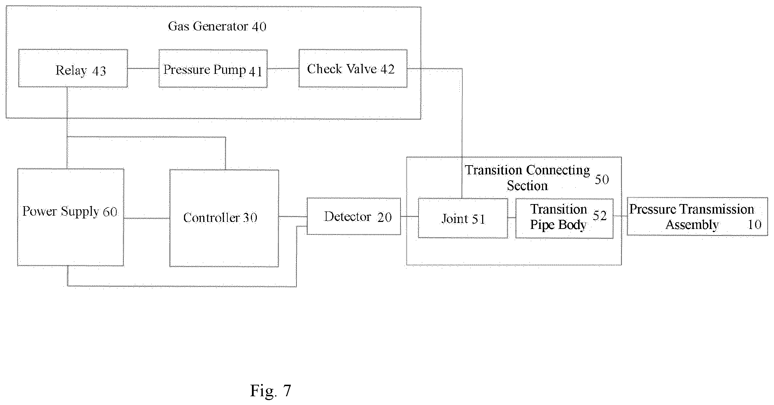

Fig. 7 shows a structural block diagram of the monitoring system for the cracking state of the blade according to an embodiment of the present disclosure. The embodiment of the present disclosure further provides the monitoring system for the cracking state of the blade, which can be used for the blade shown in Figs. 1 and 2. The blade includes a plurality of blade components and the connecting body 100, and the plurality of blade components are connected with each other by the connecting body 100 and form the cavity 110.

Please refer to Fig. 3 to Fig. 7 together. The monitoring system for the cracking state of the blade according to the embodiment of the present disclosure includes: a pressure transmission assembly 10, a detector 20 and a controller 30.

The pressure transmission assembly 10 included in the monitoring system may also use the pressure transmission assembly 10 shown in Fig. 3, which includes the side wall 11, the hollow space 12 enclosed by the side wall 11, and an opening 13 disposed on the side wall 11 and in communication with the hollow space 12. The pressure transmission assembly 10 may be placed within the cavity 110 at the connection between the blade component and the connecting body 100, and fixed by the connecting body 100, such that the region around the opening 13 of the pressure transmission assembly 10 and the corresponding blade component are sealingly connected with each other, and the pressure transmission assembly 10 can form the sealed cavity 14 with the preset air pressure value together with the blade component. The structure of the pressure transmission assembly 10, the number of opening 13, and the arrangement of different numbers of openings 13, and the connection manner between the pressure transmission assembly 10 and the blade component as well as the connecting body 100 in the monitoring system are identical with those as described above in the monitoring method for the cracking state of the blade, and will not be repeated here.

The detector 20 is connected with the pressure transmission assembly 10 and can be disposed on the blade component, to detect the actual air pressure value within the sealed cavity 14. Likewise, the detector 20 may be a pressure sensor. As mentioned in the above monitoring method, in some other embodiments, the detector 20 may be in other form of sensor, as long as the actual air pressure value (or pressure change) within the sealed cavity 14 can be directly or indirectly detected. The controller 30 determines the cracking state of the blade according to the actual air pressure value and the preset air pressure value.

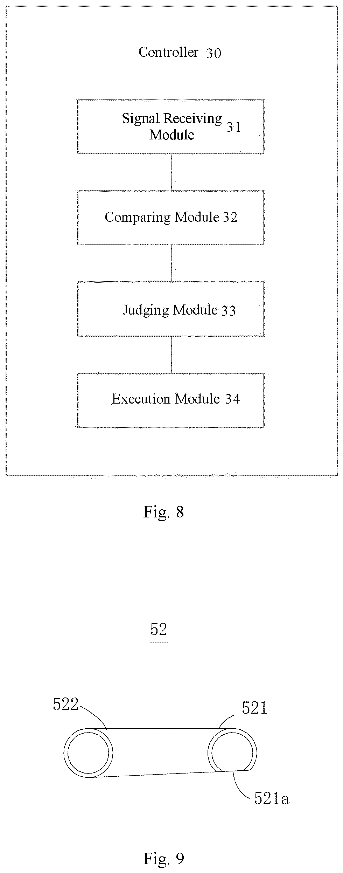

Fig. 8 shows a structural block diagram of the controller 30 according to an embodiment of the present disclosure. Please refer to Fig. 8 together. As an optional implementation, the controller 30 includes a signal receiving module 31, a comparing module 32, and a judging module 33. The signal receiving module 31 is configured to receive the actual air pressure value detected by the detector 20. The comparing module 32 is configured to compare the actual air pressure value with the preset air pressure value. The judging module 33 is configured to determine that the blade is in a cracking state, by judging that a ratio of a difference between the actual air pressure value and the preset air pressure value to the preset air pressure value is within a range of a first preset threshold and a pressure change ratio within the sealed cavity 14 per unit time exceeds a range of a second preset threshold according to the comparison result.

As an optional implementation, the judging module 33 is further configured to determine that the blade is in a non-cracking state and to output a signal indicating that the pressure transmission assembly 10 is in a pressure-to-be-adjusted state, by judging that the ratio of the difference between the actual air pressure value and the preset air pressure value to the preset air pressure value is within the range of the first preset threshold and the pressure change ratio within the sealed cavity 14 per unit time is within the range of the second preset threshold according to the comparison result.

The range of the preset air pressure value, the range of the first preset threshold, the range of the second preset threshold, and an example to illustrate the condition under which the blade is in the cracking state, the condition under which the blade is in the non-cracking state, and the condition under which the pressure transmission assembly10 is determined to be in the pressure-to-be-adjusted state, are identical with those as described above in the monitoring method for the cracking state of the blade, and will not be repeated here.

Please refer to Figs. 7 and 8 again. As an optional implementation, the monitoring system for the cracking state of the blade further includes a gas generator 40. The gas generator 40 is connected with the pressure transmission assembly 10 to adjust the actual air pressure value within the sealed cavity 14. Optionally, the gas generator 40 includes a pressure pump 41 and a relay 43. The pressure pump 41 is connected with the pressure transmission assembly 10 and connected with the controller 30 by the relay 43. Moreover, the controller 30 further includes an execution module 34. The execution module 34 is configured to control the relay 43 to turn on the pressure pump 41 according to the signal indicating pressure-to-be-adjusted state, to adjust the actual air pressure value to be equal to the preset air pressure value.

In order to ensure the power requirements for the detector 20, the controller 30 and the relay 43, optionally, the monitoring system for the cracking state of the blade further includes a power supply 60. The detector 20, the controller 30 and the relay 43 are all connected to the power supply 60 to obtain electrical energy. In specific implementation, the power supply 60 can adopt an anti-surge design, so as to effectively prevent lightning damage.

In specific implementation, the controller 30 may be provided within the cavity 110 inside the blade, or outside the blade. Apparently, it may be alternatively integrated into the overall controller of the wind turbine generator set to which the blade is applied.

Since the gas generator 40 adopts the above structure, the pressure adjustment within the sealed cavity 14 can be satisfied and installation to the blade can be facilitated. The gas generator 40 may be installed within the cavity 110 inside the blade, or on the outer surface of the blade. The pressure pump 41 may determine whether to inflate into the sealed cavity 14 or to suck out of the sealed cavity according to the preset air pressure value within the sealed cavity 14. When the preset air pressure value is greater than an outside air pressure value, the sealed cavity 14 is inflated. When the preset air pressure value is less than the outside air pressure value, such as vacuum pressure value, air is sucked out of the sealed cavity 14, such that the actual air pressure value is equal to the preset air pressure value.

In order to maintain the adjusted actual air pressure value within the sealed cavity 14 for a long time, as an optional implementation, the gas generator 40 further includes a check valve 42, and the pressure pump 41 is connected with the pressure transmission assembly 10 via the check valve 42. When the preset air pressure value is greater than the outside air pressure value and thus the pressure pump 41 needs to inflate the sealed cavity 14, the check valve 42 is restricted to be unidirectionally communicated from the pressure pump 41 to the pressure transmission assembly 10. When the preset air pressure value is less than the outside air pressure value, such as the vacuum pressure, the check valve 42 is restricted to be unidirectionally communicated from the pressure transmission assembly 10 to the pressure pump 41. Since the gas generator 40 further includes the check valve 42 in addition to the above structure, gas can be prevented from leaking out of the pressure transmission assembly 10 reversely via the check valve 42 or entering the pressure transmission assembly 10 from the one-way valve 42 reversely.

In some alternative embodiments, the pressure transmission assembly 10 may be connected with the detector 20 and the gas generator 40 by a transition connecting section 50. The transition connecting section 50 includes a joint 51 with a plurality of ports and a transition pipe body 52. The number of ports may be three, the transition pipe body 52 is connected to one of the ports, the pressure transmission assembly 10 is connected to the transition pipe body 52, and is connected with the check valve 42 by the transition pipe body 52 and the joint 51, and is in turn connected with the pressure pump 41 each other. Moreover the detector 20 and the gas generator 40 are respectively connected to one of the ports, and the detector 20 is connected to the pressure transmission assembly 10 by the joint 51 and the transition pipe body 52 to detect the actual air pressure value within the pressure transmission assembly 10.

Fig. 9 shows a schematic structural view of the transition pipe body according to an embodiment of the present disclosure. As an optional implementation, please refer to Fig. 9 together, the transition pipe body 52 includes a first connecting section 521 and a second connecting section 522 which are successively distributed along its extending direction. The first connecting section 521 includes a pipe wall which is provided with a notch 521a disposed along the extending direction and engaged with the pressure transmission assembly 10. The second connecting section 522 includes a closed pipe wall. The first connecting section 521 including notch 521a, of the transition pipe body 52, is connected with the pressure transmission assembly 10. The notch 521a is disposed opposite to the opening 13 of the pressure transmission assembly 10, and the region around the notch 521a is also sealingly connected with the blade component to which the pressure transmission assembly 10 is connected. The second connecting section 522 is connected to one of the ports of the joint 51. Therefore, the reliability of the connection between the pressure transmission assembly 10 and other structural component such as the joint 51 can be better ensured.

Due to the importance of maintaining the pressure within the sealed cavity 14, the sealing performance at the connection where components such as the pressure transmission assembly 10, the transition pipe body 52, the joint 51, the check valve 42, the detector 20, and the pressure pump 41 are connected with each other is very important. Therefore, in specific implementation, a sealing member such as a gasket, a tape, or the like can be used to ensure good sealing at the connection between various components. A test can be performed. The sealing performance can be tested by testing manner using soap bubble or liquid bubble.

Therefore, the monitoring system for the cracking state of the blade according to the embodiment of the present disclosure includes the pressure transmission assembly 10, the detector 20, and the controller 30, and the pressure transmission assembly 10 is placed within the cavity 110 at the connection between the blade component and the connecting body 100, and fixed by the connecting body 100, such that the region around the opening 13 of the pressure transmission assembly 10 is sealingly connected with the corresponding blade component each other, and the pressure transmission assembly 10 forms the sealed cavity 14 with the preset air pressure value together with the blade component. The detector 20 can monitor the pressure within the sealed cavity 14 in real time. When the blade cracks, the air pressure value within the sealed cavity 14 will change, therefore the cracking state of the blade can be determined based on the actual air pressure value and the preset air pressure value. Therefore, the monitoring of the cracking state of the blade can be achieved without being interfered by external factors, and the misjudgment rate of the monitoring result can be effectively reduced.

At the same time, by providing the gas generator 40, the adjustment of the actual air pressure value within the sealed cavity 14 can be achieved, and the failure of the monitoring system caused by the long-term natural pressure relief of the sealed cavity 14 can be avoided.

Please refer to Figs. 3 to 9 again. An embodiment of the present disclosure also provides a blade, which includes a plurality of blade components and the monitoring system for the cracking state of the blade in the foregoing embodiments. The plurality of blade components are connected with each other by the connecting body 100 and form the cavity 110. The plurality of blade components includes a windward-side shell 70, a leeward-side shell 80 and a web plate 90. In some optional examples, the connecting body 100 is connected between the windward-side shell 70 and the leeward-side shell 80, between the windward-side shell 70 and the web plate 90, and between the leeward-side shell 80 and the web plate 90 Apparently, in some other examples, it is possible that the connecting body 100 is connected at least one of: between the windward-side housing 70 and the leeward-side housing 80, between the windward-side housing 70 and the web plate 90, and the leeward-side housing 80 and the web plate 90.

The pressure transmission assembly 10 is placed within the cavity 110 at the connection between the blade component and the connecting body 100, and is fixed by the connecting body 100, such that the region around the opening 13 of the pressure transmission assembly 10 is sealingly connected with the corresponding blade component each other, and the pressure transmission assembly 10 forms the sealed cavity 14 with the preset air pressure value together with the blade component. The detector 20 is connected with the pressure transmission assembly 10 and disposed on the blade component. In specific implementation, the detector 20 may be disposed inside the cavity 110 of the blade. Apparently, optionally, the detector 20 may be disposed outside the blade. Optionally, the detector 20 is located at the root portion 1a of the blade, so that the detector 20 can be easier to be replaced when damaged. Apparently, in some examples, the detector 20 may alternatively be located at the tip portion 1b of the blade.

Likewise, the pressure transmission assembly 10 included in the blade according to the embodiment of the present disclosure may also adopt the pressure transmission assembly 10 shown in Fig. 3, and the structure of the pressure transmission assembly 10, the number of opening 13, the arrangement of different numbers of openings 13, and the connection manner between the pressure transmission assembly 10 and the blade component as well as the connecting body 100 are identical with those as described above in the monitoring method for the cracking state of the blade, and will not be repeated here.

Moreover, the detector 20 may be a pressure sensor. As mentioned in the above monitoring method, in some other embodiments, the detector 20 may also in other form of sensor, as long as the actual air pressure value within the sealed cavity 14 can be directly or indirectly detected.

Therefore, the blade according to the embodiment of the present disclosure includes the plurality of blade components, the connecting body 100 for connecting the plurality of blade components to form the cavity 110, and the above-mentioned monitoring system for the cracking state of the blade. Further, the pressure transmission assembly 10 is placed within the cavity 110 at the connection between the blade component and the connecting body 100, and is fixed by the connecting body 100, such that the region around the opening 13 of the pressure transmission assembly 10 is sealingly connected with the corresponding blade component each other, and the pressure transmission assembly 10 forms the sealed cavity 14 with the preset air pressure value together with the blade component. The pressure within the sealed cavity 14 can be monitored by the detector 20 in real time. When the blade cracks, the air pressure value within the sealed cavity 14 will change, therefore the cracking state of the blade can be determined based on the actual air pressure value and the preset air pressure value. Therefore, the monitoring of the cracking state of the blade can be achieved without being interfered by external factors, and the misjudgment rate of the monitoring result can be effectively reduced.

In addition, only one detector 20 (such as a pressure sensor) is needed for the same sealed cavity 14 to measure the separated signals at different positions of the blade along its length direction X. Therefore, the number of wiring is reduced, the installation workload is also reduced, and the risk of lightning protection is low. Moreover, since the installation position of the detector 20 is not limited, the length of the wiring can be shorten as possible. Furthermore, the monitoring system has simple structure and low cost, the overall cost of the blade can be reduced, and the reliability can be improved. Furthermore, since vulnerable electrical components such as the detector 20 may be disposed at the root portion 1a of the blade, replacement and maintenance are more convenient when damaged. Furthermore, since the data can be directly measured and analyzed without using big data or other additional software for measurement, the accuracy rate is high, so it is easy to popularize and use.

## Claims

1. A monitoring method for a cracking state of a blade, the blade having a root portion (1a) and a tip portion (1b) in a length direction of the blade, the blade comprising a plurality of blade components and a connecting body (100), the plurality of blade components being connected with each other by the connecting body (100) and forming a cavity (110), the plurality of blade components comprising a windward-side shell (70), a leeward-side shell (80), and a web plate (90), the connecting body (100) being connected at least one of: between the windward-side shell (70) and the leeward-side shell (80), between the windward-side shell (70) and the web plate (90), and between the leeward-side shell (80) and the web plate (90), wherein the monitoring methods comprises:
a step of providing a pressure transmission assembly (10), wherein the pressure transmission assembly (10) comprises a side wall (11), a hollow space (12) enclosed by the side wall (11), and an opening (13) provided on the side wall (11) and in communication with the hollow space (12), wherein the pressure transmission assembly (10) is placed within the cavity (110) at a connection between the blade component and the connection (100);
a step of forming a sealed cavity (14), comprising placing the pressure transmission assembly (10) within the cavity (110) at a connection between the blade component and the connecting body (100), and fixing the pressure transmission assembly (10) by the connecting body (100), such that a region around the opening (13) of the pressure transmission assembly (10) and the corresponding blade component are sealingly connected with each other, and the pressure transmission assembly (10) and the blade component together form the sealed cavity (14) with a preset air pressure value, wherein the connecting body (100) is formed by solidification of an adhesive, the pressure transmission assembly (10) extends from the root portion (1a) of the blade to the tip portion (1b) of the blade;
a step of detecting an actual air pressure value, comprising detecting the actual air pressure value within the sealed cavity (14) by using a detector (20);
a step of determining the cracking state, comprising determining the cracking state of the blade according to the actual air pressure value and the preset air pressure value.

2. The monitoring method for the cracking state of the blade according to claim 1, wherein
the step of determining the cracking state further comprises: determining that the blade is in a cracking state, if a ratio of a difference between the actual air pressure value and the preset air pressure value to the preset air pressure value is within a range of a first preset threshold and if a pressure change ratio per unit time within the sealed cavity (14) exceeds a range of a second preset threshold,.

3. The monitoring method for the cracking state of the blade according to claim 1 or 2, wherein:
the step of determining the cracking state further comprises: determining that the blade is in a non-cracking state and outputting a signal indicating the pressure transmission assembly (10) is in a pressure-to-be-adjusted state, if a ratio of a difference between the actual air pressure value and the preset air pressure value to the preset air pressure value is within a range of a first preset threshold and if a pressure change ratio per unit time within the sealed cavity (14) is within a range of a second preset threshold,.

4. The monitoring method for the cracking state of the blade according to any one of claims 1 to 3, further comprising:
a step of adjusting a pressure comprising adjusting the pressure within the sealed cavity (14) according to the signal indicating the pressure-to-be-adjusted state, such that the actual air pressure value within the sealed cavity (14) is equal to the preset air pressure value.

5. The monitoring method for the cracking state of the blade according to any one of claims 2 to 4, wherein
the preset air pressure value is 0Mpa~4Mpa, the range of the first preset threshold value is 50%~80%, and the range of the second preset threshold is 1%~5%.

6. A monitoring system for a cracking state of a blade, the blade having a root portion (1a) and a tip portion (1b) in a length direction of the blade, the blade comprising a plurality of blade components and a connecting body (100), the plurality of blade components being connected with each other by the connecting body (100) and forming a cavity (110), the plurality of blade components comprising a windward-side shell (70), a leeward-side shell (80), and a web plate (90), the connecting body (100) being connected at least one of: between the windward-side shell (70) and the leeward-side shell (80), between the windward-side shell (70) and the web plate (90), and between the leeward-side shell (80) and the web plate (90), wherein
the monitoring system for the cracking state of the blade comprises:
a pressure transmission assembly (10) comprising a side wall (11), a hollow space (12) enclosed by the side wall (11), and an opening (13) provided on the side wall (11) and in communication with the hollow space (12), wherein the pressure transmission assembly (10) is placed within the cavity (110) at a connection between the blade component and the connecting body (100), and is fixed by the connecting body (100), such that a region around the opening (13) of the pressure transmission assembly (10) and the corresponding blade component are sealingly connected with each other, and the pressure transmission assembly (10) and the blade component together form the sealed cavity (14) with a preset air pressure value, wherein the connecting body (100) is formed by solidification of an adhesive, the pressure transmission assembly (10) extends from the root portion (1a) of the blade to the tip portion (1b) of the blade;
a detector (20) connected to the pressure transmission assembly (10), wherein the detector (20) is disposed on the blade component and is used to detect an actual air pressure value within the sealed cavity (14); and
a controller (30) configured to determine the cracking state of the blade according to the actual air pressure value and the preset air pressure value.

7. The monitoring system for the cracking state of the blade according to claim 6, wherein
the pressure transmission assembly (10) is a tube with a predetermined length or an airbag;
the number of the opening (13) is one, and the one opening penetrates the pressure transmission assembly (10) along an extending direction of the pressure transmission assembly (10);
alternatively, the number of the openings (13) is two or more, and the two or more openings (13) are spaced apart from each other along the extending direction of the pressure transmission assembly (10).

8. The monitoring system for the cracking state of the blade according to claim 6 or 7, wherein the controller (30) comprises:
a signal receiving module (31) configured to receive the actual air pressure value detected by the detector (20);
a comparing module (32) configured to compare the actual air pressure value with the preset air pressure value; and
a judging module (33) configured to determine that the blade is in a cracking state, by judging that a ratio of a difference between the actual air pressure value and the preset air pressure value to the preset air pressure value is within a range of a first preset threshold and a pressure change ratio per unit time within the sealed cavity (14) exceeds a range of a second preset threshold according to the comparison result.

9. The monitoring system for the cracking state of the blade according to any one of claims 6 to 8, wherein the judging module (33) is further configured to determine that the blade is in a non-cracking state and outputs a signal indicating the pressure transmission assembly (10) is in a pressure-to-be-adjusted state, by judging that the ratio of the difference between the actual air pressure value and the preset air pressure value to the preset air pressure value is within the range of the first preset threshold and the pressure change ratio per unit time within the sealed cavity (14) is within the range of the second preset threshold according to the comparison result.

10. The monitoring system for the cracking state of the blade according to any one of claims 6 to 9, further comprising a gas generator (40), which is connected to the pressure transmission assembly (10) and used to adjust the actual air pressure value within the sealed cavity (14).

11. The monitoring system for the cracking state of the blade according to any one of claims 6 to 10, wherein the controller (30) further comprises an execution module (34), and the gas generator (40) comprises a pressure pump (41), a check valve (42), and a relay (43), the pressure pump (41) is connected to the pressure transmission assembly (10) through the check valve (42) and connected to the controller (30) through the relay (43), the execution module (34) of the controller (30) is configured to control the relay (43) to turn on the pressure pump (41) according to the signal indicating the pressure-to-be-adjusted state to adjust the actual air pressure value to be equal to the preset air pressure value.

12. The monitoring system for the cracking state of the blade according to any one of claims 6 to 11, wherein the pressure transmission assembly (10) is connected to the detector (20) and the gas generator (40) through a transition connection section (50), the transition connection section (50) comprises a joint (51) with a plurality of ports and a transition pipe body (52) connected to one of the plurality of ports, and the pressure transmission assembly (10) is connected to the transition pipe body (52), the detector (20) and the gas generator (40) are respectively connected to one of the plurality of ports.

13. The monitoring system for the cracking state of the blade according to any one of claims 6 to 12, wherein the transition pipe body (52) comprises a first connecting section (521) and a second connecting section (522) which are successively distributed along its extending direction, the first connecting section (521) comprises a pipe wall which is provided with a notch (521a) disposed along the extending direction and engaged with the pressure transmission assembly (10), and the second connecting section (522) comprises a closed pipe wall.

14. A blade having a root portion (1a) and a tip portion (1b) in a length direction of the blade, comprising:
a plurality of blade components, wherein the plurality of blade components are connected with each other by a connecting body (100) and form a cavity (110), the plurality of blade components comprise a windward-side shell (70), a leeward-side shell (80), and a web plate (90), the connecting body (100) is connected at least one of: between the windward-side shell (70) and the leeward-side shell (80), between the windward-side shell (70) and the web plate (90), and between the leeward-side shell (80) and the web plate (90), and the connecting body (100) is formed by solidification of an adhesive;
the monitoring system for the cracking state of the blade according to any one of claims 6 to 13, wherein the pressure transmission assembly (10) is placed within the cavity (110) at a connection between the blade component and the connecting body (100), and is fixed by the connecting body (100), such that a region around the opening (13) of the pressure transmission assembly (10) and the corresponding blade component are sealingly connected with each other, and the pressure transmission assembly (10) and the blade component together form the sealed cavity (14) with a preset air pressure value, wherein the pressure transmission assembly (10) extends from the root portion (1a) of the blade to the tip portion (1b) of the blade, the detector (20) is connected with the pressure transmission assembly (10) and is disposed on the blade component.

15. The blade according to claim 14, wherein the plurality of blade components comprise a windward-side shell (70), a leeward-side shell (80) and a web plate (90), and the connecting body (100) is connected at least of: between the windward-side shell (70) and the leeward-side shell (80), between the windward-side shell (70) and the web plate (90), and the leeward-side shell (80) and the web plate (90).

## Patentansprüche

1. Überwachungsverfahren für einen Risszustand einer Schaufel, wobei die Schaufel einen Fußteil (1a) und einen Kopfteil (1b) in einer Längsrichtung der Schaufel aufweist, die Schaufel eine Mehrzahl von Schaufelkomponenten und einen Verbindungskörper (100) umfasst, die Mehrzahl von Schaufelkomponenten durch den Verbindungskörper (100) miteinander verbunden sind und einen Hohlraum (110) bilden, die Mehrzahl von Schaufelkomponenten eine luvseitige Außenhülle (70), eine leeseitige Außenhülle (80) und eine Stegplatte (90) umfasst, und der Verbindungskörper (100) mindestens eine der folgenden Verbindungen herstellt: zwischen der luvseitigen Außenhülle (70) und der leeseitigen Außenhülle (80), zwischen der luvseitigen Außenhülle (70) und der Stegplatte (90), und zwischen der leeseitigen Außenhülle (80) und der Stegplatte (90), wobei das Überwachungsverfahren umfasst:
einen Schritt des Bereitstellens einer Druckübertragungsbaugruppe (10), wobei die Druckübertragungsbaugruppe (10) eine Seitenwand (11), einen von der Seitenwand (11) eingeschlossenen Hohlraum (12) und eine an der Seitenwand (11) vorgesehene und mit dem Hohlraum (12) in Verbindung stehende Öffnung (13) umfasst, wobei die Druckübertragungsbaugruppe (10) innerhalb des Hohlraums (110) an einer Verbindung zwischen der Schaufelkomponente und der Verbindung (100) angeordnet ist;
einen Schritt des Bildens eines abgedichteten Hohlraums (14), der das Anordnen der Druckübertragungsbaugruppe (10) innerhalb des Hohlraums (110) an einer Verbindung zwischen der Schaufelkomponente und dem Verbindungskörper (100) und das Fixieren der Druckübertragungsbaugruppe (10) durch den Verbindungskörper (100) umfasst, sodass eine Region um die Öffnung (13) der Druckübertragungsbaugruppe (10) und die entsprechende Schaufelkomponente abdichtend miteinander verbunden sind, und die Druckübertragungsbaugruppe (10) und die Schaufelkomponente zusammen den abgedichteten Hohlraum (14) mit einem voreingestellten Luftdruckwert bilden, wobei der Verbindungskörper (100) durch Verfestigung eines Klebstoffs gebildet wird und die Druckübertragungsbaugruppe (10) sich von dem Fußteil (1a) der Schaufel zu dem Kopfteil (1b) der Schaufel erstreckt;
einen Schritt des Erfassens eines tatsächlichen Luftdruckwerts, umfassend das Erfassen des tatsächlichen Luftdruckwerts innerhalb des abgedichteten Hohlraums (14) unter Verwendung eines Detektors (20);
einen Schritt des Bestimmens des Risszustands, umfassend das Bestimmen des Risszustands der Schaufel gemäß dem tatsächlichen Luftdruckwert und dem voreingestellten Luftdruckwert.

2. Überwachungsverfahren für den Risszustand der Schaufel nach Anspruch 1, wobei
der Schritt des Bestimmens des Risszustands ferner umfasst: Bestimmen, dass sich die Schaufel in einem Risszustand befindet, wenn ein Verhältnis einer Differenz zwischen dem tatsächlichen Luftdruckwert und dem voreingestellten Luftdruckwert zu dem voreingestellten Luftdruckwert innerhalb eines Bereichs eines ersten voreingestellten Schwellenwerts liegt und wenn ein Druckänderungsverhältnis pro Zeiteinheit innerhalb des abgedichteten Hohlraums (14) einen Bereich eines zweiten voreingestellten Schwellenwerts überschreitet.

3. Überwachungsverfahren für den Risszustand der Schaufel nach Anspruch 1 oder 2, wobei:
der Schritt des Bestimmens des Risszustands ferner umfasst: Bestimmen, dass sich die Schaufel in einem Nicht-Risszustand befindet, und Ausgeben eines Signals, das anzeigt, dass sich die Druckübertragungsbaugruppe (10) in einem Druckeinstellungszustand befindet, wenn ein Verhältnis einer Differenz zwischen dem tatsächlichen Luftdruckwert und dem voreingestellten Luftdruckwert zu dem voreingestellten Luftdruckwert innerhalb eines Bereichs eines ersten voreingestellten Schwellenwerts liegt und wenn ein Druckänderungsverhältnis pro Zeiteinheit innerhalb des abgedichteten Hohlraums (14) innerhalb eines Bereichs eines zweiten voreingestellten Schwellenwerts liegt.

4. Überwachungsverfahren für den Risszustand der Schaufel nach einem der Ansprüche 1 bis 3, ferner umfassend:
einen Schritt des Einstellens eines Drucks, umfassend das Einstellen des Drucks innerhalb des abgedichteten Hohlraums (14) gemäß dem Signal, das den Druckeinstellungszustand angibt, sodass der tatsächliche Luftdruckwert innerhalb des abgedichteten Hohlraums (14) gleich dem voreingestellten Luftdruckwert ist.

5. Überwachungsverfahren für den Risszustand der Schaufel nach einem der Ansprüche 2 bis 4, wobei
der voreingestellte Luftdruckwert 0 MPa bis 4 MPa beträgt, der Bereich des ersten voreingestellten Schwellenwerts 50 % bis 80 % beträgt und der Bereich des zweiten voreingestellten Schwellenwerts 1 % bis 5 % beträgt.

6. Überwachungssystem für einen Risszustand einer Schaufel, wobei die Schaufel einen Fußteil (1a) und einen Kopfteil (1b) in einer Längsrichtung der Schaufel aufweist, die Schaufel eine Mehrzahl von Schaufelkomponenten und einen Verbindungskörper (100) umfasst, die Mehrzahl von Schaufelkomponenten durch den Verbindungskörper (100) miteinander verbunden sind und einen Hohlraum (110) bilden, die Mehrzahl von Schaufelkomponenten eine luvseitige Außenhülle (70), eine leeseitige Außenhülle (80) und eine Stegplatte (90) umfasst, und der Verbindungskörper (100) mindestens eine der folgenden Verbindungen herstellt: zwischen der luvseitigen Außenhülle (70) und der leeseitigen Außenhülle (80), zwischen der luvseitigen Außenhülle (70) und der Stegplatte (90), und zwischen der leeseitigen Außenhülle (80) und der Stegplatte (90), wobei das Überwachungssystem für den Risszustand der Schaufel umfasst:
eine Druckübertragungsbaugruppe (10), umfassend eine Seitenwand (11), einen von der Seitenwand (11) eingeschlossenen Hohlraum (12) und eine an der Seitenwand (11) vorgesehene und mit dem Hohlraum (12) in Verbindung stehende Öffnung (13), wobei die Druckübertragungsbaugruppe (10) innerhalb des Hohlraums (110) an einer Verbindung zwischen der Schaufelkomponente und dem Verbindungskörper (100) angeordnet und durch den Verbindungskörper (100) fixiert ist, sodass eine Region um die Öffnung (13) der Druckübertragungsbaugruppe (10) und die entsprechende Schaufelkomponente abdichtend miteinander verbunden sind, und die Druckübertragungsbaugruppe (10) und die Schaufelkomponente zusammen den abgedichteten Hohlraum (14) mit einem voreingestellten Luftdruckwert bilden, wobei der Verbindungskörper (100) durch Verfestigung eines Klebstoffs gebildet wird und die Druckübertragungsbaugruppe (10) sich von dem Fußteil (1a) der Schaufel zu dem Kopfteil (1b) der Schaufel erstreckt;
einen Detektor (20), der mit der Druckübertragungsbaugruppe (10) verbunden ist, wobei der Detektor (20) an der Schaufelkomponente angeordnet ist und verwendet wird, um einen tatsächlichen Luftdruckwert innerhalb des abgedichteten Hohlraums (14) zu erfassen; und
eine Steuerung (30), die konfiguriert ist, um den Risszustand der Schaufel gemäß dem tatsächlichen Luftdruckwert und dem voreingestellten Luftdruckwert zu bestimmen.

7. Überwachungssystem für den Risszustand der Schaufel nach Anspruch 6, wobei
es sich bei der Druckübertragungsbaugruppe (10) um einen Schlauch mit einer vorgegebenen Länge oder um einen Luftsack handelt;
die Anzahl der Öffnungen (13) eins beträgt und die eine Öffnung die Druckübertragungsbaugruppe (10) entlang einer Erstreckungsrichtung der Druckübertragungsbaugruppe (10) durchdringt;
alternativ die Anzahl der Öffnungen (13) zwei oder mehr beträgt und die zwei oder mehr Öffnungen (13) entlang der Erstreckungsrichtung der Druckübertragungsbaugruppe (10) voneinander beabstandet sind.

8. Überwachungssystem für den Risszustand der Schaufel nach Anspruch 6 oder 7, wobei die Steuerung (30) umfasst:
ein Signalempfangsmodul (31), das konfiguriert ist, um den tatsächlichen Luftdruckwert zu empfangen, der von dem Detektor (20) erfasst wird;
ein Vergleichsmodul (32), das konfiguriert ist, um den tatsächlichen Luftdruckwert mit dem voreingestellten Luftdruckwert zu vergleichen; und
ein Beurteilungsmodul (33), das konfiguriert ist, um zu bestimmen, dass sich die Schaufel in einem Risszustand befindet, indem beurteilt wird, dass gemäß dem Vergleichsergebnis ein Verhältnis einer Differenz zwischen dem tatsächlichen Luftdruckwert und dem voreingestellten Luftdruckwert zu dem voreingestellten Luftdruckwert innerhalb eines Bereichs eines ersten voreingestellten Schwellenwerts liegt und ein Druckänderungsverhältnis pro Zeiteinheit innerhalb des abgedichteten Hohlraums (14) einen Bereich eines zweiten voreingestellten Schwellenwerts überschreitet.

9. Überwachungssystem für den Risszustand der Schaufel nach einem der Ansprüche 6 bis 8, wobei
das Beurteilungsmodul (33) ferner konfiguriert ist, um zu bestimmen, dass sich die Schaufel in einem Nicht-Risszustand befindet, und ein Signal ausgibt, das anzeigt, dass sich die Druckübertragungsanordnung (10) in einem Druckeinstellungszustand befindet, indem beurteilt wird, dass gemäß dem Vergleichsergebnis das Verhältnis der Differenz zwischen dem tatsächlichen Luftdruckwert und dem voreingestellten Luftdruckwert zu dem voreingestellten Luftdruckwert innerhalb des Bereichs des ersten voreingestellten Schwellenwerts liegt und das Druckänderungsverhältnis pro Zeiteinheit innerhalb des abgedichteten Hohlraums (14) innerhalb des Bereichs des zweiten voreingestellten Schwellenwerts liegt.

10. Überwachungssystem für den Risszustand der Schaufel nach einem der Ansprüche 6 bis 9, ferner umfassend einen Gasgenerator (40), der mit der Druckübertragungsbaugruppe (10) verbunden ist und verwendet wird, um den tatsächlichen Luftdruckwert innerhalb des abgedichteten Hohlraums (14) einzustellen.

11. Überwachungssystem für den Risszustand der Schaufel nach einem der Ansprüche 6 bis 10, wobei die Steuerung (30) ferner ein Ausführungsmodul (34) umfasst und der Gasgenerator (40) eine Druckpumpe (41), ein Rückschlagventil (42) und ein Relais (43) umfasst, wobei die Druckpumpe (41) über das Rückschlagventil (42) mit der Druckübertragungsbaugruppe (10) verbunden ist und über das Relais (43) mit der Steuerung (30) verbunden ist, wobei das Ausführungsmodul (34) der Steuerung (30) konfiguriert ist, um das Relais (43) zu steuern, um die Druckpumpe (41) gemäß dem Signal einzuschalten, das den Druckeinstellungszustand anzeigt, um den tatsächlichen Luftdruckwert so einzustellen, dass er gleich dem voreingestellten Luftdruckwert ist.

12. Überwachungssystem für den Risszustand der Schaufel nach einem der Ansprüche 6 bis 11, wobei die Druckübertragungsbaugruppe (10) mit dem Detektor (20) und dem Gasgenerator (40) über einen Übergangsverbindungsabschnitt (50) verbunden ist, wobei der Übergangsverbindungsabschnitt (50) eine Verbindung (51) mit einer Mehrzahl von Anschlüssen und einen Übergangsrohrkörper (52) umfasst, der mit einem der Mehrzahl von Anschlüssen verbunden ist, und die Druckübertragungsbaugruppe (10) mit dem Übergangsrohrkörper (52) verbunden ist, wobei der Detektor (20) und der Gasgenerator (40) jeweils mit einem der Mehrzahl von Anschlüssen verbunden sind.

13. Überwachungssystem für den Risszustand der Schaufel nach einem der Ansprüche 6 bis 12, wobei der Übergangsrohrkörper (52) einen ersten Verbindungsabschnitt (521) und einen zweiten Verbindungsabschnitt (522) umfasst, die nacheinander entlang seiner Erstreckungsrichtung verteilt sind, der erste Verbindungsabschnitt (521) eine Rohrwand umfasst, die mit einer entlang der Erstreckungsrichtung angeordneten Kerbe (521a) versehen ist und mit der Druckübertragungsbaugruppe (10) in Eingriff steht, und der zweite Verbindungsabschnitt (522) eine geschlossene Rohrwand umfasst.

14. Schaufel mit einem Fußteil (1a) und einem Kopfteil (1b) in einer Längsrichtung der Schaufel, umfassend:
eine Mehrzahl von Schaufelkomponenten, wobei die Mehrzahl von Schaufelkomponenten durch einen Verbindungskörper (100) miteinander verbunden sind und einen Hohlraum (110) bilden, die Mehrzahl von Schaufelkomponenten eine luvseitige Außenhülle (70), eine leeseitige Außenhülle (80) und eine Stegplatte (90) umfasst, und der Verbindungskörper (100) mindestens eine der folgenden Verbindungen herstellt: zwischen der luvseitigen Außenhülle (70) und der leeseitigen Außenhülle (80), zwischen der luvseitigen Außenhülle (70) und der Stegplatte (90), und zwischen der leeseitigen Außenhülle (80) und der Stegplatte (90), und wobei der Verbindungskörper (100) durch Verfestigung eines Klebstoffs gebildet wird;
das Überwachungssystem für den Risszustand der Schaufel nach einem der Ansprüche 6 bis 13, wobei die Druckübertragungsbaugruppe (10) innerhalb des Hohlraums (110) an einer Verbindung zwischen der Schaufelkomponente und dem Verbindungskörper (100) angeordnet und durch den Verbindungskörper (100) fixiert ist, sodass eine Region um die Öffnung (13) der Druckübertragungsbaugruppe (10) und die entsprechende Schaufelkomponente abdichtend miteinander verbunden sind, und die Druckübertragungsbaugruppe (10) und die Schaufelkomponente zusammen den abgedichteten Hohlraum (14) mit einem voreingestellten Luftdruckwert bilden, wobei sich die Druckübertragungsbaugruppe (10) von dem Fußteil (1a) der Schaufel zu dem Kopfteil (1b) der Schaufel erstreckt, und der Detektor (20) mit der Druckübertragungsbaugruppe (10) verbunden ist und an der Schaufelkomponente angeordnet ist.

15. Schaufel nach Anspruch 14, wobei die Mehrzahl von Schaufelkomponenten eine luvseitige Außenhülle (70), eine leeseitige Außenhülle (80) und eine Stegplatte (90) umfasst, und der Verbindungskörper (100) mindestens eine der folgenden Verbindungen herstellt: zwischen der luvseitigen Außenhülle (70) und der leeseitigen Außenhülle (80), zwischen der luvseitigen Außenhülle (70) und der Stegplatte (90), und zwischen der leeseitigen Außenhülle (80) und der Stegplatte (90).

## Revendications

1. Procédé de surveillance d'un état de fissuration d'une pale, la pale ayant une partie de base (1a) et une partie d'extrémité (1b) dans le sens de la longueur de la pale, la pale comprenant une pluralité de composants de pale et un corps de liaison (100), la pluralité de composants de pale étant reliés les uns aux autres par le corps de liaison (100) et formant une cavité (110), la pluralité de composants de pale comprenant une coque côté vent (70), une coque côté sous le vent (80), et une plaque d'âme (90), le corps de liaison (100) étant relié à au moins l'un des éléments suivants : entre la coque côté vent (70) et la coque côté sous le vent (80), entre la coque côté vent (70) et la plaque d'âme (90), et entre la coque côté sous le vent (80) et la plaque d'âme (90), où les procédés de surveillance comprennent :
une étape consistant à fournir un ensemble de transmission de pression (10), où l'ensemble de transmission de pression (10) comprend une paroi latérale (11), un espace creux (12) entouré par la paroi latérale (11), et une ouverture (13) prévue sur la paroi latérale (11) et communiquant avec l'espace creux (12), où l'ensemble de transmission de pression (10) est placé à l'intérieur de la cavité (110) au niveau d'une liaison entre le composant de pale et le corps de liaison (100) ;
une étape consistant à former une cavité étanche (14), comprenant le placement de l'ensemble de transmission de pression (10) à l'intérieur de la cavité (110) au niveau d'une liaison entre le composant de pale et le corps de liaison (100), et fixant l'ensemble de transmission de pression (10) par le corps de liaison (100), de sorte qu'une région autour de l'ouverture (13) de l'ensemble de transmission de pression (10) et le composant de pale correspondant sont reliés de manière étanche l'un à l'autre, et l'ensemble de transmission de pression (10) et le composant de pale forment ensemble la cavité étanche (14) avec une valeur de pression d'air prédéfinie, où le corps de liaison (100) est formé par solidification d'un adhésif, l'ensemble de transmission de pression (10) s'étend de la partie de base (1a) de la pale à la partie d'extrémité (1b) de la pale ;
une étape consistant à détecter une valeur de pression d'air réelle, comprenant la détection de la valeur de pression d'air réelle à l'intérieur de la cavité étanche (14) en utilisant un détecteur (20) ;
une étape consistant à déterminer l'état de fissuration, comprenant la détermination de l'état de fissuration de la pale en fonction de la valeur de pression d'air réelle et de la valeur de pression d'air prédéfinie.

2. Procédé de surveillance de l'état de fissuration de la pale selon la revendication 1, où :
l'étape consistant à déterminer l'état de fissuration comprend en outre : le fait de déterminer que la pale est dans un état de fissuration, si un rapport d'une différence entre la valeur de pression d'air réelle et la valeur de pression d'air prédéfinie sur la valeur de pression d'air prédéfinie se situe dans une plage d'un premier seuil prédéfini et si un rapport de changement de pression par unité de temps à l'intérieur de la cavité étanche (14) dépasse une plage d'un second seuil prédéfini.

3. Procédé de surveillance de l'état de fissuration de la pale selon la revendication 1 ou 2, où :
l'étape consistant à déterminer l'état de fissuration comprend en outre : le fait de déterminer que la pale est dans un état de non-fissuration et d'émettre un signal indiquant que l'ensemble de transmission de pression (10) est dans un état de pression à ajuster, si un rapport d'une différence entre la valeur de pression d'air réelle et la valeur de pression d'air prédéfinie sur la valeur de pression d'air prédéfinie se situe dans une plage d'un premier seuil prédéfini et si un rapport de changement de pression par unité de temps dans la cavité étanche (14) se situe dans une plage d'un second seuil prédéfini.

4. Procédé de surveillance de l'état de fissuration de la pale selon l'une quelconque des revendications 1 à 3, comprenant en outre :
une étape consistant à ajuster une pression comprenant le fait d'ajuster la pression à l'intérieur de la cavité étanche (14) en fonction du signal indiquant l'état de pression à ajuster, de sorte que la valeur de pression d'air réelle à l'intérieur de la cavité étanche (14) soit égale à la valeur de pression d'air prédéfinie.

5. Procédé de surveillance de l'état de fissuration de la pale selon l'une quelconque des revendications 2 à 4, où :
la valeur de pression d'air prédéfinie est comprise entre 0 et 4 MPa, la plage de la première valeur seuil prédéfinie est comprise entre 50 et 80 %, et la plage du deuxième seuil prédéfini est comprise entre 1 et 5 %.

6. Système de surveillance d'un état de fissuration d'une pale, la pale ayant une partie de base (1a) et une partie d'extrémité (1b) dans le sens de la longueur de la pale, la pale comprenant une pluralité de composants de pale et un corps de liaison (100), la pluralité de composants de pale étant reliés les uns aux autres par le corps de liaison (100) et formant une cavité (110), la pluralité de composants de pale comprenant une coque côté vent (70), une coque côté sous le vent (80), et une plaque d'âme (90), le corps de liaison (100) étant relié au moins à l'un des éléments suivants : entre la coque côté vent (70) et la coque côté sous le vent (80), entre la coque côté vent (70) et la plaque d'âme (90), et entre la coque côté sous le vent (80) et la plaque d'âme (90), où le système de surveillance de l'état de fissuration de la pale comprend :
un ensemble de transmission de pression (10) comprenant une paroi latérale (11), un espace creux (12) entouré par la paroi latérale (11), et une ouverture (13) prévue sur la paroi latérale (11) et communiquant avec l'espace creux (12), où l'ensemble de transmission de pression (10) est placé à l'intérieur de la cavité (110) au niveau d'une liaison entre le composant de pale et le corps de liaison (100), et est fixé par le corps de liaison (100), de sorte qu'une région autour de l'ouverture (13) de l'ensemble de transmission de pression (10) et le composant de pale correspondant sont reliés de manière étanche l'un à l'autre, et l'ensemble de transmission de pression (10) et le composant de pale forment ensemble la cavité étanche (14) avec une valeur de pression d'air prédéfinie, où le corps de liaison (100) est formé par solidification d'un adhésif, l'ensemble de transmission de pression (10) s'étend de la partie de base (1a) de la pale à la partie d'extrémité (1b) de la pale ;
un détecteur (20) relié à l'ensemble de transmission de pression (10), où le détecteur (20) est disposé sur le composant de pale et est utilisé pour détecter une valeur de pression d'air réelle à l'intérieur de la cavité étanche (14) ; et
un contrôleur (30) configuré pour déterminer l'état de fissuration de la pale en fonction de la valeur de pression d'air réelle et de la valeur de pression d'air prédéfinie.

7. Système de surveillance de l'état de fissuration de la pale selon la revendication 6, où :
l'ensemble de transmission de pression (10) est un tube avec une longueur prédéterminée ou un airbag ;
le nombre d'ouvertures (13) est de un, et la seule ouverture traverse l'ensemble de transmission de pression (10) le long d'une direction d'extension de l'ensemble de transmission de pression (10) ;
alternativement, le nombre d'ouvertures (13) est de deux ou plus, et les deux ou plus de deux ouvertures (13) sont espacées les unes des autres le long de la direction d'extension de l'ensemble de transmission de pression (10).

8. Système de surveillance de l'état de fissuration de la pale selon la revendication 6 ou 7, où le contrôleur (30) comprend :
un module de réception de signaux (31) configuré pour recevoir la valeur de pression d'air réelle détectée par le détecteur (20) ;
un module de comparaison (32) configuré pour comparer la valeur de pression d'air réelle avec la valeur de pression d'air prédéfinie ; et
un module de jugement (33) configuré pour déterminer que la pale est dans un état de fissuration, en jugeant qu'un rapport d'une différence entre la valeur de pression d'air réelle et la valeur de pression d'air prédéfinie sur la valeur de pression d'air prédéfinie se situe dans une plage d'un premier seuil prédéfini et un rapport de changement de pression par unité de temps à l'intérieur de la cavité étanche (14) dépasse une plage d'un second seuil prédéfini selon le résultat de la comparaison.

9. Système de surveillance de l'état de fissuration de la pale selon l'une quelconque des revendications 6 à 8, où :
le module de jugement (33) est en outre configuré pour déterminer que la pale est dans un état de non-fissuration et émet un signal indiquant que l'ensemble de transmission de pression (10) est dans un état de pression à ajuster, en jugeant que le rapport de la différence entre la valeur de pression d'air réelle et la valeur de pression d'air prédéfinie sur la valeur de pression d'air prédéfinie se situe dans la plage du premier seuil prédéfini et que le rapport de changement de pression par unité de temps à l'intérieur de la cavité étanche (14) se situe dans la plage du second seuil prédéfini selon le résultat de la comparaison.

10. Système de surveillance de l'état de fissuration de la pale selon l'une quelconque des revendications 6 à 9, comprenant en outre un générateur de gaz (40), qui est relié à l'ensemble de transmission de pression (10) et utilisé pour ajuster la valeur de pression d'air réelle à l'intérieur de la cavité étanche (14).

11. Système de surveillance de l'état de fissuration de la pale selon l'une quelconque des revendications 6 à 10, où le contrôleur (30) comprend en outre un module d'exécution (34), et le générateur de gaz (40) comprend une pompe à pression (41), un clapet anti-retour (42), et un relais (43), la pompe à pression (41) est reliée à l'ensemble de transmission de pression (10) par le clapet anti-retour (42) et reliée au contrôleur (30) par le relais (43), le module d'exécution (34) du contrôleur (30) est configuré pour commander le relais (43) pour mettre en marche la pompe à pression (41) selon le signal indiquant l'état de pression à ajuster pour ajuster la valeur de pression d'air réelle pour qu'elle soit égale à la valeur de pression d'air prédéfinie.

12. Système de surveillance de l'état de fissuration de la pale selon l'une quelconque des revendications 6 à 11, où l'ensemble de transmission de pression (10) est relié au détecteur (20) et au générateur de gaz (40) par l'intermédiaire d'une section de connexion de transition (50), la section de connexion de transition (50) comprend un joint (51) avec une pluralité de ports et un corps de tuyau de transition (52) relié à l'un de la pluralité de ports, et l'ensemble de transmission de pression (10) est relié au corps de tuyau de transition (52), le détecteur (20) et le générateur de gaz (40) sont respectivement reliés à l'un de la pluralité de ports.

13. Système de surveillance de l'état de fissuration de la pale selon l'une quelconque des revendications 6 à 12, où le corps de tuyau de transition (52) comprend une première section de connexion (521) et une seconde section de connexion (522) qui sont successivement réparties le long de sa direction d'extension, la première section de connexion (521) comprend une paroi de tuyau qui est munie d'une encoche (521a) disposée le long de la direction d'extension et engagée avec l'ensemble de transmission de pression (10), et la seconde section de connexion (522) comprend une paroi de tuyau fermée.

14. Pale ayant une partie de base (1a) et une partie d'extrémité (1b) dans une direction de la longueur de la pale, comprenant :
une pluralité de composants de pale, où la pluralité de composants de pale sont reliés les uns aux autres par un corps de liaison (100) et forment une cavité (110), la pluralité de composants de pale comprend une coque côté vent (70), une coque côté sous le vent (80), et une plaque d'âme (90), le corps de liaison (100) est relié au moins à l'un des éléments suivants : entre la coque côté vent (70) et la coque côté sous le vent (80), entre la coque côté vent (70) et la plaque d'âme (90), et entre la coque côté sous le vent (80) et la plaque d'âme (90), et le corps de liaison (100) est formé par solidification d'un adhésif ;
le système de surveillance de l'état de fissuration de la pale selon l'une quelconque des revendications 6 à 13, où l'ensemble de transmission de pression (10) est placé à l'intérieur de la cavité (110) au niveau d'une liaison entre le composant de pale et le corps de liaison (100), et est fixé par le corps de liaison (100), de sorte qu'une région autour de l'ouverture (13) de l'ensemble de transmission de pression (10) et le composant de pale correspondant sont reliés de manière étanche l'un à l'autre, et l'ensemble de transmission de pression (10) et le composant de pale forment ensemble la cavité étanche (14) avec une valeur de pression d'air prédéfinie, où l'ensemble de transmission de pression (10) s'étend de la partie de base (1a) de la pale à la partie d'extrémité (1b) de la pale, le détecteur (20) est relié à l'ensemble de transmission de pression (10) et est disposé sur le composant de pale.

15. Pale selon la revendication 14, où la pluralité de composants de pale comprend une coque côté vent (70), une coque côté sous le vent (80) et une plaque d'âme (90), et le corps de liaison (100) est relié au moins entre : la coque côté vent (70) et la coque côté sous le vent (80), la coque côté vent (70) et la plaque d'âme (90), et la coque côté sous le vent (80) et la plaque d'âme (90).
